# EUROPÄISCHE PATENTSCHRIFT

(11) **EP 3 887 421 B1**
(45) Veröffentlichungstag und Bekanntmachung des Hinweises auf die Patenterteilung: **11.01.2023**
(21) Anmeldenummer: 19808849.4
(22) Anmeldetag: 29.11.2019
(51) Int. Cl.: C08G 18/48, C08G 18/76, C08G 18/10, C08G 18/24, C08G 18/32

(54) **KONTINUIERLICHE HERSTELLUNG EINES PPG BASIERTEN TPUS**
CONTINUOUS PRODUCTION OF PPG BASED TPU
FABRICATION CONTINUE D'UN TPU À BASE DE PPG

(30) Priorität: 29.11.2018 EP 18209089
(43) Veröffentlichungstag der Anmeldung: 06.10.2021
(73) Patentinhaber: BASF SE, 67056 Ludwigshafen am Rhein (DE)
(72) Erfinder: SCHAEFER, Frank, 49448 Lemfoerde (DE); FREESE, Michael, 49448 Lemfoerde (DE); POESELT, Elmar, 49448 Lemfoerde (DE); YAMAMOTO, Etsuhiro, Yokkaichi-shi, 510--0011 (JP); SUZUKI, Yasuyuki, Yokkaichi-shi, 510--0011 (JP); WATANABE, Dai, Yokkaichi-shi, 510--0011 (JP); DRAWE, Patrick, 49448 Lemfoerde (DE)
(74) Vertreter: BASF IP Association
(86) Internationale Anmeldenummer: PCT/EP2019/083115
(87) Internationale Veröffentlichungsnummer: WO 2020/109566

(56) Entgegenhaltungen:
- EP-A1- 0 748 828
- EP-A1- 1 342 740
- EP-A1- 2 509 127

## Beschreibung

Die vorliegende Erfindung betrifft ein thermoplastisches Polyurethan mit einer Glasübergangstemperatur der Weichphase von kleiner oder gleich -25°C, gemessen mit DMA und einer Heizrate von 2K/min bei 1Hz unter Torsion in Anlehnung an DIN EN ISO 6721 : 2016; Maximum G", erhalten oder erhältlich durch ein Verfahren, mindestens umfassend die Umsetzung einer Polyolzusammensetzung (PZ-1) mindestens enthaltend ein Polypropylenglykol, wobei der Anteil der sekundären, terminalen OH-Gruppen an der Gesamtzahl der terminalen OH Gruppen des Polypropylenglykols im Bereich von größer 90% liegt, mit einem Polyisocyanat (P1) unter erhalt einer Polyolzusammensetzung (PZ-2) enthaltende ein Präpolymer (PP-1), und die Umsetzung der Polyolzusammensetzung (PZ-2) enthaltend das Präpolymer (PP-1) mit einer Polyisocyanatzusammensetzung (PI), enthaltend mindestens ein Polyisocyanat (P2), und mindestens einem Kettenverlängerer mit einem Molekulargewicht < 500g/mol. Weiterhin betrifft die vorliegende Erfindung ein Verfahren zur Herstellung eines derartigen thermoplastischen Polyurethans sowie die Verwendung eines erfindungsgemäßen thermoplastischen Polyurethans oder eines thermoplastischen Polyurethans erhältlich oder erhalten nach einem erfindungsgemäßen Verfahren zur Herstellung von Spritzgussprodukten, Extrusionsprodukten, Folien, Profile und Formkörpern.

Thermoplastische Polyurethan-Elastomere (TPU) sind von großer technischer Bedeutung, weil sie ausgezeichnete mechanische Eigenschaften besitzen und sich kostengünstig thermoplastisch verarbeiten lassen. Durch die Variation der Einsatzstoffe können unterschiedliche Eigenschaftsprofile erhalten werden. Der Aufbau der thermoplastisch verarbeitbaren Polyurethanelastomeren kann entweder schrittweise (Prepolymerdosierverfahren) oder durch die gleichzeitige Reaktion aller Komponenten in einer Stufe (one-shot-Dosierverfahren) erfolgen. Thermoplastische Polyurethane für verschiedene Anwendungen sind aus dem Stand der Technik grundsätzlich bekannt.

So offenbart WO 2014/060300 A1 ein Verfahren zur Herstellung eines auf Polyethercarbonatpolyolen basierenden thermoplastischen Polyurethan-Elastomers. Die Verwendung zur Herstellung von Extrusions- oder Spritzgussartikeln, sowie die durch Extrusion oder Spritzguss hergestellten Artikel werden ebenfalls offenbart.

WO 2007/101807 A1 offenbart ein Verfahren zur kontinuierlichen Herstellung von Isocyanatgruppen aufweisenden Prepolymeren, bevorzugt mit einem NCO-Gehalt zwischen 1 % und 50 %, vorzugsweise zwischen 1 % bis 30 %, bevorzugt zwischen 1 % bis 25 %, besonders bevorzugt zwischen 3 % und 23 %, insbesondere zwischen 4 % und 20 %, wobei die Herstellung in einem Extruder durchgeführt wird. Weiter bezieht sich die Erfindung auf Verfahren zur Herstellung von kompakten oder bevorzugt geschäumten, thermoplastischen oder vernetzten, weichen, halbharten oder harten Polyurethanen, die gegebenenfalls Harnstoff-, Isocyanurat-, Allophanat und/oder Biuret-Strukturen aufweisen können, wobei die Prepolymere einsetzt werden.

EP 1757632 A1 betrifft ein Verfahren zur Herstellung thermoplastisch verarbeitbarer Polyurethanelastomere (TPU) mit verbessertem Verarbeitungsverhalten in einer mehrstufigen Umsetzung, wobei zunächst ein Prepolymer hergestellt wird, das dann weiter umgesetzt wird. Auch in EP 1391472 A1 wird ein mehrstufiges Verfahren zur kontinuierlichen Herstellung thermoplastisch verarbeitbarer Polyurethanelastomere (TPU) mit Zugfestigkeiten von >30 MPa (gemessen nach EN ISO 527-3) über ein Prepolymer offenbart.

EP 900812 A1 offenbart ein Verfahren zur kontinuierlichen Herstellung thermoplastisch verarbeitbarer Polyurethane, bei dem ein Isocyanat-terminiertes Prepolymer bei Temperaturen <200°C mit Kettenverlängerer intensiv vermischt und die erhaltene Mischung in einem Zweiwellenextruder unter quasi-adiabatischen Reaktionsbedingungen zum thermoplastisch verarbeitbaren Polyurethan umgesetzt wird.

In DE 19625987 A1 wird ein Verfahren zur kontinuierlichen Herstellung von thermoplastisch verarbeitbaren Polyurethanen offenbart, bei dem in einer mehrstufigen Umsetzung schrittweise das Isocyanat zugesetzt wird.

Polypropylenglykol ist aufgrund der niedrigen Kosten als Einsatzmaterial für die Herstellung von thermoplastischen Polyurethanen interessant. In den herkömmlichen kontinuierlichen Verfahren kann unmodifiziertes Polypropylenglykol (PPG) nur schlecht eingesetzt werden, da die niedrige Reaktivität der sekundären OH-Gruppen zu Nebenreaktionen führt und Produkte erhalten werden, die unzureichende mechanische Eigenschaften aufweisen.

Die Verwendung von Polypropylenglykol als Einsatzstoff bei der Herstellung von thermoplastischen Polyurethanen wird beispielsweise in WO 02/064656A2 offenbart. Thermoplastische Polyurethane werden unter Verwendung von Polyolen mit einem hohen Anteil sekundärer Hydroxyl-Gruppen in einem one-shot Verfahren hergestellt. Auch WO 93/24549 A1 und US 2006/0258831 A1 offenbaren one-shot Verfahren zur Herstellung thermoplastischer Polyurethane unter Verwendung von Polyolen mit sekundären OH-Gruppen.

EP 1746117 A1 offenbart ein Verfahren zur Herstellung von Isocyanatgruppen enthaltenden Prepolymeren mit einem geringen Gehalt an monomeren Isocyanaten durch Umsetzung von Diisocyanaten mit mindestens einer Verbindung mit mehr als zwei mit Isocyanatgruppen reaktiven Wasserstoffatomen und gegebenenfalls anschließende Entfernung der nicht umgesetzten monomeren Diisocyanate. Es wird ein one-shot Verfahren unter Verwendung von Präpolymeren offenbart.

Bei den aus dem Stand der Technik bekannten Verfahren ist es häufig schwierig, die Blocklängen und damit die Eigenschaften des erhaltenen Polymers einzustellen. Eine der vorliegenden Erfindung zugrundeliegende Aufgabe lag demgemäß darin, thermoplastische Polyurethane bzw. Verfahren zu deren Herstellung bereitzustellen, bei denen Polypropylenglykol eingesetzt werden kann, und die gute mechanische Eigenschaften aufweisen. Eine weitere Aufgabe der vorliegenden Erfindung war es, ein Verfahren zur kostengünstigen Herstellung der entsprechenden Polymere bereitzustellen.

Erfindungsgemäß wird diese Aufgabe gelöst durch ein thermoplastisches Polyurethan mit einer Glasübergangstemperatur der Weichphase von kleiner oder gleich -25°C, gemessen mit DMA und einer Heizrate von 2K/min bei 1Hz unter Torsion in Anlehnung an DIN EN ISO 6721 : 2016; Maximum G", erhalten oder erhältlich durch ein Verfahren, mindestens umfassend die Schritte (i) und (ii):
(i) Umsetzung einer Polyolzusammensetzung (PZ-1) enthaltend mindestens ein Polyol auf Basis von Polypropylenglykol, wobei der Anteil der sekundären, terminalen OH-Gruppen an der Gesamtzahl der terminalen OH Gruppen des Polypropylenglykols im Bereich von >90% liegt, mit einem Polyisocanat (P1) unter erhalt einer Polyolzusammensetzung (PZ-2) enthaltende ein Präpolymer (PP-1),
(ii) Umsetzung der Polyolzusammensetzung (PZ-2) enthaltend das Präpolymer (PP-1) mit einer Polyisocyanatzusammensetzung (PI), enthaltend mindestens ein Polyisocyanat (P2), und mindestens einem Kettenverlängerer mit einem Molekulargewicht <500g/ mol,
wobei die Umsetzung gemäss Schritt (i) kontinuierlich erfolgt.

Gemäß einem weiteren Aspekt betrifft die vorliegende Erfindung auch ein Verfahren zur Herstellung eines thermoplastischen Polyurethans mit einer Glasübergangstemperatur der Weichphase von kleiner oder gleich -25°C, gemessen mit DMA und einer Heizrate von 2K/min bei 1Hz unter Torsion in Anlehnung an DIN EN ISO 6721 : 2016; Maximum G", umfassend die Schritte (i) und (ii):
(i) Umsetzung einer Polyolzusammensetzung (PZ-1) enthaltend mindestens ein Polyol auf Basis von Polypropylenglykol, wobei der Anteil der sekundären, terminalen OH-Gruppen an der Gesamtzahl der terminalen OH Gruppen des Polypropylenglykols im Bereich von >90% liegt, mit einem Polyisocanat (P1) unter erhalt einer Polyolzusammensetzung (PZ-2) enthaltende ein Präpolymer (PP-1),
(ii) Umsetzung der Polyolzusammensetzung (PZ-2) enthaltend das Präpolymer (PP-1) mit einer Polyisocyanatzusammensetzung (PI), enthaltend mindestens ein Polyisocyanat (P2), und mindestens einem Kettenverlängerer mit einem Molekulargewicht <500g/ mol,
wobei die Umsetzung gemäss Schritt (i) kontinuierlich erfolgt.

Die Messung erfolgt im Rahmen der vorliegenden Erfindung in Anlehnung an die DIN EN ISO 6721. Abweichend von den in der DIN vorgegebenen Parametern sind die im Rahmen der vorliegenden Erfindung bestimmten Parameter mit einem Stufenprogramm gemessen, das vergleichbar ist mit einem konstanten 2K/min Heizratenprogramm. Dabei wird mit einem 5 K Stufenprogramm und Haltezeiten pro Stufe von 35s gemessen. Die Messungen werden an Proben mit einem Breite zu Dicken Verhältnis von 1:6 durchgeführt.

Das erfindungsgemäße Verfahren kann weitere Schritte umfassen. So kann das Verfahren weitere Behandlungsschritte vor und/oder nach den Schritten (i) und (ii) umfassen oder auch eine Behandlung zwischen den Schritten (i) und (ii). Im Rahmen der vorliegenden Erfindung können neben den genannten Komponenten und Zusammensetzungen auch weitere Verbindungen eingesetzt werden.

Vorzugsweise erfolgt im Rahmen der vorliegenden Erfindungen zwischen der Umsetzung gemäß Schritt (i) und der Umsetzung gemäß Schritt (ii) keine Lagerung oder Abfüllung der Polyolzusammensetzung (PZ-2).

Demgemäß betrifft die vorliegende Erfindung gemäß einer weiteren Ausführungsform auch ein thermoplastisches Polyurethan wie zuvor beschrieben, wobei zwischen der Umsetzung gemäß Schritt (i) und der Umsetzung gemäß Schritt (ii) keine Lagerung oder Abfüllung der Polyolzusammensetzung (PZ-2) erfolgt.

Es kann vorteilhaft sein, das Verfahren kontinuierlich, beispielsweise als Inline-one-shot Verfahren zu führen. Demgemäß betrifft die vorliegende Erfindung gemäß einer weiteren Ausführungsform auch ein thermoplastisches Polyurethan wie zuvor beschrieben, wobei das Verfahren kontinuierlich geführt wird.

Überraschend wurde gefunden, dass die erfindungsgemäßen thermoplastischen Polyurethane, die unter Verwendung eines kostengünstigen Polypropylenglykols mit einem hohen Anteil an sekundären, terminalen OH-Gruppen hergestellt werden können, gute mechanische Eigenschaften aufweisen und transparente Produkte erhalten werden können.

Es wurde gefunden, dass es möglich ist, mit einer kontinuierlichen Inline-oneshoterfahrensführung (beispielsweise Inline-one-shot) ein Prepolymer herzustellen, dass dann weiter umgesetzt wird, wobei ein Umsatz von <100%, also beispielsweise von 90 %, bei der Herstellung des Prepolymers ausreichend ist, um die gewünschten mechanischen Eigenschaften der erfindungsgemäß hergestellten thermoplastischen Polyurethane zu erzielen. Damit ist es erfindungsgemäß möglich, einen unwirtschaftlichen Umsatzgrad des Prepolymers von 100% für ein TPU-Insituverfahren zu vermeiden.

Soweit nicht anders angegeben werden die mechanischen Eigenschaften im Rahmen der vorliegenden Erfindung an Spritzgussplatten bestimmt, die zuvor 20 h bei 100 °C getempert wurden.

Erfindungsgemäß ist es möglich, beispielsweise für unpolarere Polyole, über die Herstellung eines Präpolymers eine bessere Verträglichkeit mit dem Kettenverlängerer zu erzielen, sodass der Molekulargewichts-Aufbau verbessert werden kann. Erfindungsgemäß kann auch gezielt der NCO-Restgehalt eingestellt werden, sodass die Blocklängen und auch die Morphologie des erhaltenen thermoplastischen Polyurethans beeinflusst werden kann.

Die erfindungsgemäßen thermoplastischen Polyurethane sind erhältlich bzw. werden erhalten durch ein Verfahren, mindestens umfassend die Schritte (i) und (ii). Durch die erfindungsgemäße Verfahrensführung ist es möglich, Polypropylenglykol zur Herstellung der thermoplastischen Polyurethane einzusetzen und das Verfahren gezielt so zu führen, dass Produkte mit guten mechanischen und optischen Eigenschaften erhalten werden.

Dabei wird zunächst gemäß Schritt (i) die Polyolzusammensetzung (PZ-1) enthaltend ein Polypropylenglykol, mit einem Polyisocanat (P1) unter erhalt einer Polyolzusammensetzung (PZ-2) enthaltende ein Präpolymer (PP-1) umgesetzt. Die eingesetzte Polyolzusammensetzung (PZ-1) enthält ein Polypropylenglykol, wobei der Anteil der sekundären, terminalen OH-Gruppen an der Gesamtzahl der terminalen OH Gruppen des Polypropylenglykols im Bereich von 20 bis 100% liegt.

Die bei der Umsetzung erhaltene Polyolzusammensetzung (PZ-2) enthaltend das Präpolymer (PP-1) wird anschließend gemäß Schritt (ii) mit einer Polyisocyanatzusammensetzung (PI), die mindestens ein Polyisocyanat (P2) enthält, und mindestens einem Kettenverlängerer mit einem Molekulargewicht < 500g/mol umgesetzt.

Soweit nicht anders angegeben erfolgt im Rahmen der vorliegenden Erfindung die Bestimmung des mittleren Molekulargewichts Mn der eingesetzen Polyole über die OH-Zahl.

Für die Herstellung der erfindungsgemäßen thermoplastischen Polyurethane geeignete Polypropylenglykole sind grundsätzlich bekannt. Beispielsweise sind erfindungsgemäß Polypropylenglykole geeignet, die ein zahlenmittleres Molekulargewicht Mn im Bereich von 650 g/mol bis 4000 g/mol aufweisen, insbesondere ein zahlenmittleres Molekulargewicht Mn im Bereich von 850 g/mol bis 3500 g/mol, weiter bevorzugt ein zahlenmittleres Molekulargewicht Mn im Bereich von 950 g/mol bis 2500 g/mol, besonders bevorzugt ein zahlenmittleres Molekulargewicht Mn im Bereich von 1000 g/mol bis 2000 g/mol, weiter bevorzugt ein zahlenmittleres Molekulargewicht Mn im Bereich von 1200 g/mol bis 1750 g/mol, beispielsweise ein Molekulargewicht Mn von 1400 g/mol.

Es hat sich gezeigt, dass insbesondere Polypropylenglykole mit höheren Molekulargewichten, beispielsweise einem mittleren Molekulargewicht Mn von größer als 2000 zu weniger guten mechanischen Eigenschaften des erhaltenen thermoplastischen Polyurethans führen. Auch die Verwendung von Mischungen verschiedener Polypropylenglykole führt zu schlechten mechanischen Eigenschaften.

Vorzugsweise weisen die eingesetzten Polyole eine Polydispersität Pd von kleiner als 1,5 auf, weiter bevorzugt im Bereich von 1,2 bis 1,4 auf.

Demgemäß betrifft die vorliegende Erfindung gemäß einer weiteren Ausführungsform auch ein thermoplastisches Polyurethan wie zuvor beschrieben, wobei das Polypropylenglykol ein zahlenmittleres Molekulargewicht Mn im Bereich von 650 g/mol bis 4000 g/mol aufweist.

Demgemäß betrifft die vorliegende Erfindung gemäß einer weiteren Ausführungsform auch ein thermoplastisches Polyurethan wie zuvor beschrieben, wobei das Polypropylenglykol ein zahlenmittleres Molekulargewicht Mn im Bereich von 1200 g/mol bis 1750 g/mol und eine Polydidpersität Pd von kleiner als 1,5 aufweist.

Die erfindungsgemäße Verfahrensführung erlaubt es, dass ein großer Teil der sekundären, terminalen OH-Gruppen des Polypropylenglykols umgesetzt wird, beispielsweise mindestens 50% der sekundären, terminalen OH-Gruppen des Polypropylenglykols, weiter bevorzugt mindestens-70% der sekundären, terminalen OH-Gruppen des Polypropylenglykols, insbesondere mindestens 80% der sekundären, terminalen OH-Gruppen des Polypropylenglykols, insbesondere mindestens 90% oder mindestens 95%, insbesondere mindestens 99% der sekundären, terminalen OH-Gruppen des Polypropylenglykols.

Demgemäß betrifft die vorliegende Erfindung gemäß einer weiteren Ausführungsform auch ein thermoplastisches Polyurethan wie zuvor beschrieben, wobei bei der Umsetzung gemäß Schritt (i) mindestens 50% der sekundären, terminalen OH-Gruppen des Polypropylenglykols umgesetzt werden.

Erfindungsgemäß wird die Umsetzung gemäß Schritt (i) so durchgeführt, dass eine Umsetzung der sekundären, terminalen OH-Gruppen des Polypropylenglykols erfolgt.

Dazu werden beispielsweise die Temperatur und Reaktionsdauer aber auch die Mischgüte optimiert. Beispielsweise kann die Reaktion unter adiabaten Bedingungen für eine Zeit von 30 Minuten geführt werden. Weiter bevorzugt ist die Reaktionsdauer im Rahmen der vorliegenden Erfindung kleiner als 20min, insbesondere kleiner als 10min. Vorzugsweise wird die Reaktion bei einer Temperatur von T<160°C, bevorzugt T<150°C, insbesondere T<140°C geführt.

Bei der Umsetzung gemäß Schritt (i) wird die Polyolzusammensetzung (PZ-1) mit einem Polyisocyanat (P1) umgesetzt. Die Polyolzusammensetzung (PZ-1) kann neben dem Polypropylenglykol weitere Polyole enthalten. Im Rahmen der vorliegenden Erfindung ist der Anteil des Propylenglykols an der Polyolzusammensetzung (PZ-1) größer als 75%, weiter bevorzugt größer als 90%, insbesondere größer als 95%. Beispielsweise liegt der Anteil des Propylenglykols an der Polyolzusammensetzung (PZ-1) im Bereich von 95% bis 99%, jeweils bezogen auf die gesamte Polyolzusammensetzung (PZ-1).

Geeignete Polyisocyanate sind dem Fachmann an sich bekannt. Erfindungsgemäß wird mindestens ein Polyisocyanat eingesetzt. Erfindungsgemäß können auch Mischungen aus zwei oder mehr Polyisocyanaten eingesetzt werden.

Bevorzugte Polyisocyanate sind im Rahmen der vorliegenden Erfindung Diisocyanate, insbesondere aliphatische oder aromatische Diisocyanate, weiter bevorzugt aromatische Diisocyanate.

Das erfindungsgemäße Verfahren hat den Vorteil, dass durch die Verfahrensführung unterschiedliche Isocyanate für die Herstellung des Prepolymers und des Aufbaus der Hartphase eingesetzt werden können.

Gemäß einer weiteren Ausführungsform betrifft die vorliegende Erfindung demgemäß ein Verfahren wie zuvor beschrieben, wobei das Polyisocyanat ein aromatisches Diisocyanat ist.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Geeignete aromatische Diisocyanate sind insbesondere 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethan-diisocyanat und/oder Phenylendiisocyanat. Bevorzugte aromatische Diisocyanate sind 2,2'-, 2,4'- und/oder 4,4'-Diphenylmethandiisocyanat (MDI) und deren Mischungen.

Gemäß einer bevorzugten Ausführungsform ist das Polyisocyanat (P1) ausgewählt aus der Gruppe bestehend aus Methylendiphenyldiisocyanat (MDI), Hexamethylen-1,6-diisocyanat (HDI), 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), 1-Isocyanato-3,3,5-trimethyl-5-isocyanatomethyl-cyclohexan (Isophoron-diisocyanat, IPDI) und 4,4'-, 2,4'- und 2,2'-Methylendicyclohexyldiisocyanat (H12MDI).

Bevorzugte Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurete der vorgenannten Diisocyanate, ferner Oligomere, die durch gezielte Umsetzung von semiblockierten Diisocyanaten mit Polyolen, die im Mittel mehr als 2 und vorzugsweise 3 oder mehr Hydroxy-Gruppen aufweisen, erhältlich sind.

Erfindungsgemäß kann das Polyisocyanat (P1) in reiner Form oder in Form einer Zusammensetzung enthaltend das Polyisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon, Tetrahydrofuran und Kohlenwasserstoffe.

Demgemäß betrifft die vorliegende Erfindung gemäß einer weiteren Ausführungsform auch ein thermoplastisches Polyurethan wie zuvor beschrieben, wobei die das Polyisocyanat (P1) ausgewählt ist aus der Gruppe bestehend aus Methylendiphenyldiisocyanat (MDI), Hexamethylen-1,6-diisocyanat (HDI), 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), 1-Isocyanato-3,3,5-trimethyl-5-isocyanatomethyl-cyclohexan (Isophoron-diisocyanat, IPDI) und 4,4'-, 2,4'- und 2,2'-Methylendicyclohexyldiisocyanat (H12MDI).

Die Umsetzung gemäß Schritt (i) kann an sich in jeder dem Fachmann bekannten geeigneten Vorrichtung erfolgen, solange gewährleistet ist, dass die Reaktionsbedingungen eingestellt werden können, so dass eine Umsetzung der sekundären, terminalen OH-Gruppen des Propylenglykols erfolgt.

Erfindungsgemäß erfolgt die Umsetzung gemäß Schritt (i) beispielsweise bei einer Temperatur im Bereich von 60 bis 300°C für eine Zeit im Bereich von bis zu 5 Stunden unter Erhalt der Polyolzusammensetzung (PZ-2). Erfindungsgemäß erfolgt die Umsetzung gemäß Schritt (i) bevorzugt für eine Zeit im Bereich von 1 Minute bis 180 Minuten, weiter bevorzugt im Bereich von 1 Minute bis 30 Minuten, besonders bevorzugt im Bereich von 1 Minute bis 20 Minuten.

Erfindungsgemäß liegt die Temperatur vorzugsweise im Bereich von 60 bis 300 °C, bevorzugt im Bereich von 80 bis 200 °C und besonders bevorzugt im Bereich von 80 bis 150 °C.

Beispielsweise kann bei einer Verfahrensführung im Reaktionsextruder die Reaktionsdauer kleiner als 20min, bevorzugt kleiner als 10min, insbesondere kleiner als 5min sein bei einer Reaktionstemperatur von beispielsweise im Bereich von 60°C bis 300°C, bevorzugt im Bereich von 70°C bis 250°C, insbesondere im Bereich von 80°C bis 230°C.

Beispielsweise kann bei einer Verfahrensführung im Bandverfahren die Reaktionsdauer kleiner als 30min, bevorzugt kleiner als 20min, insbesondere kleiner als 10min sein, beispielsweise bei einer Reaktionstemperatur im Bereich von 60°C bis 300°C, bevorzugt im Bereich von 70°C bis 220°C, insbesondere im Bereich von 120°C bis 200°C.

Üblicherweise liegt die Temperatur beim Einmischen des Prepolymers in die Reaktionsmischung im Bereich von 60 bis 300 °C, bevorzugt im Bereich von 70 bis 200 °C und besonders bevorzugt im Bereich von 80 bis 150 °C.

Die Umsetzung gemäß Schritt (i) erfolgt kontinuierlich.

Die Umsetzung kann erfindungsgemäß in einer geeigneten Apparatur erfolgen, wobei dem Fachmann geeignete Verfahren an sich bekannt sind. Geeignet sind für die Umsetzung gemäß Schritt (i) beispielsweise Statikmischer, Reaktionsextruder oder Rührkessel. Demgemäß betrifft die vorliegende Erfindung gemäß einer weiteren Ausführungsform auch ein thermoplastisches Polyurethan wie zuvor beschrieben, wobei die Umsetzung gemäß Schritt (i) in einem Statikmischer, Reaktionsextruder oder Rührkessel (Continuous Stirred Tank Reactors, CSTR) oder Kombinationen dieser erfolgt.

Beispielsweise können ein Rührer in einem Behälter oder ein Mischkopf bzw. ein hochtouriger Rohrmischer, eine Düse oder ein Statikmischer verwendet werden. Ebenso kann die Umsetzung auch in einem Extruder oder einem Teil eines Mehrwellenextruders (z.B. eines Zweiwellenkneters (ZSK)) durchgeführt werden.

Das Vermischen der Komponenten erfolgt beispielsweise mit einem Mischaggregat, insbesondere in einem mit hoher Scherenergie arbeitenden Mischaggregat. Beispielhaft seien ein Mischkopf, ein Statikmischer, eine Düse oder ein Mehrwellenextruder genannt.

Die Temperaturen der Extrudergehäuse werden vorteilhafterweise so gewählt, dass die Reaktionskomponenten zum vollständigen Umsatz gebracht werden und die mögliche Einarbeitung weiterer Hilfsstoffe bzw. der weiteren Komponenten bei größtmöglicher Produktschonung durchgeführt werden kann.

Beispielsweise kann die Umsetzung gemäß Schritt (i) in einem Statikmischer oder Reaktivmischer/Extruder erfolgen und die Umsetzung gemäß Schritt (ii) kann in einem Extruder oder Bandverfahren erfolgen.

Beispielsweise kann die Umsetzung gemäß Schritt (i), die Umsetzung gemäß Schritt (ii) oder die Umsetzung gemäß Schritt (i) und Schritt (ii) in einem Extruder erfolgen.

Gemäß einer bevorzugten Ausführungsform der vorliegenden Erfindung erfolt die Umsetzung gemäß Schritt (i) in einem Statikmischer und die Umsetzung gemäß Schritt (ii) in einem Bandverfahren.

Bei der Umsetzung gemäß Schritt (i) wird erfindungsgemäß die Polyolzusammensetzung (PZ-2) enthaltend das Präpolymer (PP-1) erhalten. Erfindungsgemäß handelt es sich bei der Polyolzusammensetzung (PZ-2) um eine Mischung. Die Mischung kann erfindungsgemäß nicht umgesetzte Edukte, also beispielsweise nicht umgesetztes Polyisocyanat (P1) oder nicht umgesetzte Polyolzusammensetzung (PZ-1) enthalten. Das Umsetzungsprodukt liegt dabei erfindungsgemäß als Gemisch vor, wobei die einzelnen Moleküle beispielsweise in der Verteilung sowie der Länge der Blöcke verschieden sein können.

Erfindungsgemäß wird die Polyolzusammensetzung (PZ-2) gemäß Schritt (ii) weiter umgesetzt. Dabei kann die Polyolzusammensetzung (PZ-2) direkt umgesetzt werden oder es können weitere Polyole zugesetzt werden.

Weitere Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden als weitere Polyole Polyesterole oder Polyetherole eingesetzt. Besonders bevorzugt sind Polyeterpolyole. Das zahlenmittlere Molekulargewicht der erfindungsgemäß eingesetzten Polyole liegen vorzugsweise zwischen 250 g/mol und 2000 g/mol, bevorzugt zwischen 500 g/mol und 1500 g/mol, insbesondere zwischen 650 g/mol und 1000 g/mol.

Demgemäß betrifft die vorliegende Erfindung gemäß einer weiteren Ausführungsform auch ein thermoplastisches Polyurethan wie zuvor beschrieben, wobei der Polyolzusammensetzung (PZ-2) bei der Umsetzung gemäß Schritt (ii) mindestens ein Polyol ausgewählt aus der Gruppe bestehend aus Polyetherdiolen, Polyesterdiolen und Polycarbonat(diol)en zugegeben wird.

Weiterhin betrifft die vorliegende Erfindung gemäß einer weiteren Ausführungsform auch ein thermoplastisches Polyurethan wie zuvor beschrieben, wobei der Polyolzusammensetzung (PZ-2) bei der Umsetzung gemäß Schritt (ii) kein weiteres Polyol zugegeben wird.

Bevorzugte Polyetherole sind erfindungsgemäß Polyethyleneglykole und Polytetrahydrofurane. Beispielsweise können erfindungsgemäß auch Mischungen verschiedener Polytetrahydrofurane eingesetzt werden, die sich im Molekulargewicht unterscheiden.

Beispielsweise geeignet ist ein Polytetrahydrofuran (PTHF) mit einem Molekulargewicht Mn im Bereich von 200 g/mol bis 2000 g/mol, weiter bevorzugt im Bereich von 250 g/mol bis 1500 g/mol, weiter bevorzugt im Bereich von 500 g/mol bis 1000 g/mol.

Erfindungsgemäß sind neben PTHF auch andere weitere Polyether geeignet, oder auch Polyester.

Als weitere Bestandteile kann die Polyolzusammensetzung (PZ-2) im Rahmen der vorliegenden Erfindung auch monomere, kurzkettige Glykole, wie Propandiol-1,3 oder Butandiol-1,4, mit einem Molekulargewicht Mn von kleiner als 500g/mol enthalten.

Bei der Umsetzung gemäß Schritt (ii) wird die Polyisocyanatzusammensetzung (PI) enthaltend ein Polyisocyanat (P2) eingesetzt. Grundsätzlich sind die bereits im Zusammenhang mit dem erfindungsgemäß eingesetzten Polyisocyanat (P1) genannten Isocyanate als Polyisocyanat (P2) geeignet. Im Rahmen der vorliegenden Erfindung können verschieden Polyisocyanate eingesetzt werden. Es ist jedoch auch möglich, dass als Polyisocyanat (P1) und (P2) dasselbe Polyisocyanat eingesetzt wird. Geeignet sind als Polyisocyanat (P2) insbesondere die zuvor genannten Isocynate.

Demgemäß betrifft die vorliegende Erfindung gemäß einer weiteren Ausführungsform auch ein thermoplastisches Polyurethan wie zuvor beschrieben, wobei die das Polyisocyanat (P2) ausgewählt ist aus der Gruppe bestehend aus Methylendiphenyldiisocyanat (MDI), Hexamethylen-1,6-diisocyanat (HDI), 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), 1-Isocyanato-3,3,5-trimethyl-5-isocyanatomethyl-cyclohexan (Isophoron-diisocyanat, IPDI) und 4,4'-, 2,4'- und 2,2'-Methylendicyclohexyldiisocyanat (H12MDI).

Weiter wird in Schritt (ii) ein Kettenverlängerer mit einem Molekulargewicht < 500 g/mol eingesetzt. Im Rahmen der vorliegenden Erfindung handelt es sich hierbei um das gewichtsmittlere Molekulargewicht. Als Kettenverlängerer können im Rahmen der vorliegenden Erfindung beispielsweise Verbindungen mit Hydroxyl- oder Amino-Gruppen eingesetzt werden, insbesondere mit 2 Hydroxyl- oder Amino-Gruppen. Erfindungsgemäß ist es jedoch auch möglich, dass Gemische verschiedener Verbindungen als Kettenverlängerer eingesetzt werden. Dabei ist erfindungsgemäß die mittlere Funktionalität der Mischung 2.

Erfindungsgemäß bevorzugt werden als Kettenverlängerer Verbindungen mit Hydroxylgruppen eingesetzt, insbesondere Diole. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol, 1,6-Hexandiol. Auch aromatische Verbindungen wie Hydroxychinon(bis(2-hydroxyethyl))ether können eingesetzt werden.

Erfindungsgemäß können auch Verbindungen mit Amino-Gruppen eingesetzt werden, beispielsweise Diamine. Ebenso können Gemische von Diolen und Diaminen eingesetzt werden.

Bevorzugt ist der Kettenverlängerer ein Diol mit einem Molekulargewicht Mw < 220 g/mol. Erfindungsgemäß ist es möglich, dass lediglich ein Diol mit einem Molekulargewicht Mw < 220 g/mol zur Herstellung des transparenten, thermoplastischen Polyurethans eingesetzt wird.

Gemäß einer weiteren Ausführungsform werden mehr als ein Diol als Kettenverlängerer eingesetzt. Es können somit auch Mischungen von Kettenverlängerern eingesetzt werden.

Gemäß einer weiteren Ausführungsform betrifft die vorliegende Erfindung demgemäß ein Verfahren wie zuvor beschrieben, wobei der gemäß (i) in Schritt (a) des erfindungsgemäßen Verfahrens eingesetzte Kettenverlängerer ein Diol mit einem Molekulargewicht Mw < 220 g/mol ist.

Der Kettenverlängerer wird vorzugsweise in einer Menge eingesetzt, sodass das molare Verhältnis aus der Summe der Funktionalitäten der Komponenten der eingesetzten Polyolzusammensetzung (PZ-2) und Kettenverlängerer zu der Summe der Funktionalitäten der eingesetzten Isocyanatzusammensetzung (PI) im Bereich von 1 zu 0,8 bis 1 zu 1,3 liegt, weiter bevorzugt im Bereich von 1 zu 0,9 bis 1 zu 1,2, beispielsweise im Bereich von 1 zu 0,95 bis 1 zu 1,15.

Demgemäß betrifft die vorliegende Erfindung gemäß einer weiteren Ausführungsform auch ein thermoplastisches Polyurethan wie zuvor beschrieben, wobei das molare Verhältnis aus der Summe der Funktionalitäten der Komponenten der eingesetzten Polyolzusammensetzung (PZ-2) und Kettenverlängerer zu der Summe der Funktionalitäten der eingesetzten Isocyanatzusammensetzung (PI) im Bereich von 1 zu 0,8 bis 1 zu 1,3 liegt.

Erfindungsgemäß ist es auch möglich, dass Zusatzstoffe oder Hilfsmittel eingesetzt werden, um die Umsetzung gemäß Schritt (i) oder (ii) zu beschleunigen bzw. zu verbessern. Insbesondere können Katalysatoren eingesetzt werden.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen. Geeignete Katalysatoren für die Umsetzung gemäß Schritt (a) sind beispielsweise Tributylzinnoxid, Zinn(II)-Dioctoat, Dibutylzinndilaurat oder Bi(III)-Carboxylate.

Die Gesamtmenge an Katalysatoren beträgt in der Regel etwa 0 bis 5 Gew.-%, bevorzugt 0 bis 1 Gew.-%, bezogen auf die Summe der eingesetzten Komponenten.

Neben den Reaktionskomponenten und den Katalysatoren können auch Hilfsmittel und/oder Zusatzstoffe bis zu 20 Gew.-%, bezogen auf die Gesamtmenge der eingesetzten Komponenten, zugesetzt werden. Sie können in einer der Reaktionskomponenten, vorzugsweise in der Polyol-Komponente gelöst werden oder auch ggf. nach erfolgter Reaktion in einem nachgeschalteten Mischaggregat, wie z.B. einem Extruder, zudosiert werden.

Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Zur Herstellung der thermoplastischen Polyurethane können die Aufbaukomponenten gegebenenfalls in Gegenwart von Katalysatoren, Hilfsmitteln und/oder Zusatzstoffen vorzugsweise in solchen Mengen zur Reaktion gebracht werden, dass das Äquivalenzverhältnis von NCO-Gruppen zur Summe der NCO-reaktiven Gruppen, insbesondere der OH-Gruppen der niedermolekularen Verbindungen und der Polyole 0,9:1,0 bis 1,1:1,0, vorzugsweise 0,95:1,0 bis 1,05:1,0 beträgt.

Erfindungsgemäß können die Eigenschaften der erhaltenen thermoplastischen Polyurethane durch die Wahl der eingesetzten Polyisocyanate, Polyole und Kettenverlängerer beeinflusst werden. Vorteilhafterweise weist das erfindungsgemäße thermoplastische Polyurethan eine Shore Härte im Bereich von 50 A bis 80 D auf, bestimmt gemäß DIN 53505, weiter bevorzugt eine Shore Härte im Bereich von 60A bis 98A, besonders bevorzugt eine Shore Härte im Bereich von-65A bis 90 A, jeweils bestimmt gemäß DIN 53505.

Demgemäß betrifft die vorliegende Erfindung gemäß einer weiteren Ausführungsform auch ein thermoplastisches Polyurethan wie zuvor beschrieben, wobei das thermoplastische Polyurethan eine Shore Härte im Bereich von 50 A bis 80 D aufweist, bestimmt gemäß DIN 53505.

Vorzugsweise sind die erfindungsgemäßen thermoplastischen Polyurethane opak bis transparent. Demgemäß betrifft die vorliegende Erfindung gemäß einer weiteren Ausführungsform auch ein thermoplastisches Polyurethan wie zuvor beschrieben, wobei das thermoplastische Polyurethan opak bis transparent ist.

Wie ausgeführt betrifft die vorliegende Erfindung gemäß einem weiteren Aspekt auch ein Verfahren zur Herstellung eines thermoplastischen Polyurethans, umfassend die Schritte (i) und (ii):
(i) Umsetzung einer Polyolzusammensetzung (PZ-1) enthaltend ein Polypropylenglykol, wobei der Anteil der sekundären, terminalen OH-Gruppen an der Gesamtzahl der terminalen OH Gruppen des Polypropylenglykols im Bereich von 20 bis 100% liegt, mit einem Polyisocanat (P1) unter erhalt einer Polyolzusammensetzung (PZ-2) enthaltende ein Präpolymer (PP-1),
(ii) Umsetzung der Polyolzusammensetzung (PZ-2) enthaltend das Präpolymer (PP-1) mit einer Polyisocyanatzusammensetzung (PI), enthaltend mindestens ein Polyisocyanat (P2), und mindestens einem Kettenverlängerer mit einem Molekulargewicht <500g/ mol,
wobei die Umsetzung gemäss Schritt (i) kontinuierlich erfolgt.

Das erfindungsgemäße Verfahren kann weitere Schritte umfassen, beispielsweise Temperaturanpassungen oder formgebende Schritte. Bezüglich der bevorzugten Ausführungsformen wird auf die obigen Ausführungen verwiesen.

Die Verarbeitung der erhaltenen thermoplastischen Polyurethane kann gemäß üblichen Verfahren erfolgen, beispielsweise auf Extrudern, Spritzgussmaschinen, Blasformen, Kalandern, Knetern und Pressen.

Aufgrund der guten mechanischen Eigenschaften und des guten Temperaturverhaltens sind die erfindungsgemäßen thermoplastischen Polyurethane insbesondere zur Herstellung von Extrusions-, Spritzguss- und Pressartikeln sowie Schäumen, , Schuhsohlen, Kabelummantelungen, Schläuchen, Profilen, Antriebsriemen, Fasern, Vliesen, Folien, Formteilen, Steckern, Gehäusen, Dämpfungselementen für Elektroindustrie, Automobilindustrie, Maschinenbau, 3D-Druck, Medizin und Konsumartikel geeignet, insbesondere zur Herstellung von Spritzgussprodukten, Extrusionsprodukten, Folien, Profile und Formkörpern.

Gemäß einem weiteren Aspekt betrifft die vorliegende Erfindung auch die Verwendung eines erfindungsgemäßen thermoplastischen Polyurethans oder eines thermoplastischen Polyurethans erhältlich oder erhalten nach einem erfindungsgemäßen Verfahren zur Herstellung von Spritzgussprodukten, Extrusionsprodukten, Folien, Profile und Formkörpern. Demgemäß betrifft die vorliegende Erfindung gemäß einer weiteren Ausführungsform auch die Verwendung eines erfindungsgemäßen thermoplastischen Polyurethans oder eines thermoplastischen Polyurethans erhältlich oder erhalten nach einem erfindungsgemäßen Verfahren zur Herstellung von Spritzgussprodukten, Extrusionsprodukten, Folien, Profile und Formkörpern wie zuvor beschrieben, wobei der Formkörper ein Schlauch, eine Kabelummantelung, Dichtung oder Folie ist.

Insbesondere eignen sich die erfindungsgemäßen thermoplastischen Polyurethane zur Herstellung von Formkörpern wie Schläuchen.

Gemäß einem weiteren Aspekt betrifft die vorliegende Erfindung auch einen Schlauch, umfassend ein thermoplastischen Polyurethans wie zuvor beschrieben oder ein thermoplastisches Polyurethan erhältlich oder erhalten nach einem erfindungsgemäßen Verfahren.

Vorteilhafte Ausführungsformen betreffen beispielsweise mehrlagige Schläuche, wobei die erfindungsgemäßen Schläuche mehrlagig aufgebaut sein können oder auch mit Fasern, Füllstoffen oder Geweben verstärkt sein können.

Demgemäß betrifft die vorliegende Erfindung gemäß einer weiteren Ausführungsform auch einen Schlauch wie zuvor beschrieben, wobei der Schlauch mehrlagig aufgebaut ist. Gemäß einer weiteren Ausführungsform betrifft die vorliegende Erfindung auch einen Schlauch wie zuvor beschrieben, wobei der Schlauch durch Fasern, Füllstoffe oder Geweben verstärkt ist. Geeignete Verfahren zur Herstellung derartiger Schläuche sind grundsätzlich bekannt und können weitere Schritte, wie beispielsweise eine Nachbehandlung umfassen. Demgemäß betrifft die vorliegende Erfindung gemäß einer weiteren Ausführungsform auch einen Schlauch wie zuvor beschrieben, wobei der Schlauch einer Nachbehandlung unterzogen wurde. Weitere Ausführungsformen der vorliegenden Erfindung sind den Ansprüchen und den Beispielen zu entnehmen.

Die nachfolgenden Beispiele dienen der Veranschaulichung der Erfindung.

### BEISPIELE

### 1. Folgende Einsatzstoffe wurden eingesetzt:

| | |
|---|---|
| Polyol 1: | Polyetherpolyol mit einer OH-Zahl von 63 und einer Mischung aus primären und sekundären OH-Gruppen basierend auf Propylenglycol und Ethylenglycol im Verhältnis 3 zu 1 (Funktionalität: 1,99) |
| Polyol 2: | Polyetherpolyol mit einer OH-Zahl von 104 und ausschließlich sekundären OH-Gruppen basierend auf Propylenglycol (Funktionalität: 1,99) |
| Polyol 3: | Polyetherpolyol mit einer OH-Zahl von 78 und ausschließlich sekundären OH-Gruppen basierend auf Propylenglycol (Funktionalität: 1,99) |
| Polyol 4: | Polyetherpolyol mit einer OH-Zahl von 114 und ausschließlich primären OH-Gruppen basierend auf Tetramethylenoxid (Funktionalität: 2) |
| Polyol 5: | Polyetherpolyol mit einer OH-Zahl von 55 und ausschließlich sekundären OH-Gruppen basierend auf Propylenglycol (Funktionalität 1,99) |
| Isocyanat 1: | Aromatisches Isocyanat (4,4'-Methylendiphenyldiisocyanat) |
| Kettenverlängerer (KV) 1: | 1,4-Butandiol |
| Katalysator: | Zinn-II-isooctoat (50%ig in Dioktyladipat) |

### 2. Herstellungsbeispiele

### 2.1 Beispiel für eine diskontinuierliche Synthese nach dem one-shot Verfahren

Ein thermoplastische Polyurethan (TPU) wurde aus 4,4'-Diphenylmethandiisocyanat, Kettenverlängerer 1,4-Butandiol, Katalysator Zinn-II-isooctoat und Polyetherpolyol unter Rühren in einem Reaktionsgefäß synthetisiert. Nach Erreichen einer Reaktionstemperatur von 110 °C wurde die Lösung auf eine auf 120 °C temperierte Heizplatte ausgegossen und die erhaltende TPU-Platte nach Temperung 15 h, 80 °C granuliert. Das Granulat wurde im Spritzguss zu 2 mm Prüfkörpern umgeformt und die daraus ausgestanzten S2-Prüfstäbe (nach DIN 53504) mechanischen Tests unterzogen. Die maximale Temperatur der Schmelze in der Prüfkörperherstellung lag bei 240°C.

### 2.2 Beispiel für eine diskontinuierliche Synthese nach dem prepolymer Verfahren

Ein Prepolymer wurde aus 4,4'-Diphenylmethandiisocyanat, Katalysator Zinn-II-isooctoat und Polyetherpolyol unter Rühren in einem Reaktionsgefäß bei Temperaturen zwischen 80 °C und 120 °C synthetisiert, bis >90% der OH-Funktionalitäten des Polyetherpolyols umgesetzt waren. Das Prepolymer wurde im Anschluss durch Zugabe von Kettenverlängerer 1,4-Butandiol zu einem thermoplastischen Polyurethan (TPU) umgesetzt. Nach Erreichen einer Reaktionstemperatur von 110 °C wurde die Lösung auf eine auf 120 °C temperierte Heizplatte ausgegossen und die erhaltende TPU-Platte nach Temperung 15 h, 80 °C granuliert. Das Granulat wurde im Spritzguss zu 2 mm Prüfkörpern umgeformt und die daraus ausgestanzten S2-Prüfstäbe (nach DIN 53504) mechanischen Tests unterzogen. Die maximale Temperatur der Schmelze in der Prüfkörperherstellung lag bei 240°C.

### 2.3 Beispiel für eine kontinuierliche Synthese nach dem prepolymer Verfahren

Ein Prepolymer wurde aus 4,4'-Diphenylmethandiisocyanat, Katalysator Zinn-II-isooctoat und Polyetherpolyol in einem adiabaten, kontinuierlichen Reaktor mit einer Verweilzeit von ca. 10 min hergestellt. Vor Eintritt in den Reaktor wurden die Edukte vorgemischt und auf Reaktionstemperatur von 100 °C bis 120 °C aufgeheizt. Nach Ende des adiabaten, kontinuierlichen Reaktors wurde das erhaltene Prepolymer auf 60 °C bis 90 °C abgekühlt. Durch Zumischen des auf 60 °C vortemperierten Kettenverlängerers 1,4-Butandiol und anschließendem Temperieren der Reaktionsmischung auf einem Reaktionsband mit einer Verweilzeit von 5 min bis 10 min auf 110 °C bis 180 °C wurde ein thermoplastisches Polyurethan (TPU) erhalten. Dieses wurde im Anschluss granuliert und im Spritzguss zu 2 mm Prüfkörpern umgeformt. Die daraus ausgestanzten S2-Prüfstäbe (nach DIN 53504) wurden mechanischen Tests unterzogen. Die maximale Temperatur der Schmelze in der Prüfkörperherstellung lag bei 240°C.

### 3. Zusammensetzungen der Herstellungsbeispiele

**Tabelle 1**

| Bsp. | Isoc. 1 [g/min] | Polyol 1 [g/min] | Polyol 2 [g/min] | Polyol 3 [g/min] | Polyol 4 [g/min] | KV [g/min] | Kat. [ppm] | Verfahren | |
|---|---|---|---|---|---|---|---|---|---|
| 1 | 562,56 | 800 | - | - | - | 159,32 | - | One-shot | Diskonti |
| 2 | 562,56 | 800 | - | - | - | 159,32 | - | Prepo | Diskonti |
| 3 | 618,58 | - | 750 | - | - | 160,12 | 4 | One-shot | Diskonti |
| 4 | 618,58 | - | 750 | - | - | 160,12 | 4 | Prepo | Diskonti |
| 5 | 548,96 | - | - | 750 | - | 151,97 | 4 | One-Shot | Diskonti |
| 6 | 548,96 | - | - | 750 | - | 151,97 | 4 | Prepo | Diskonti |
| 7 | 600,62 | - | - | 720 | 80 | 163,87 | 4 | One-Shot | Diskonti |
| 8 | 600,62 | - | - | 720 | 80 | 163,87 | 4 | Prepo | Diskonti |
| 9 | 158,6 | - | - | 214,4 | - | 42,8 | 2,4 | Prepo | Konti |

### 4. Eigenschaften der Herstellungsbeispiele

**Tabelle 2a**

| | | **BSP 1 (Referenz)** | **BSP2** | **BSP3 (Referenz)** | **BSP4** | **BSP5 (Referenz)** |
|---|---|---|---|---|---|---|
| Hartphasenanteil | % | 39,6 | 39,6 | 39,6 | 39,6 | 39,6 |
| Herstellbarkeit | | Ja | Ja | Ja | Ja | Ja |
| Eigenschaften | | schlecht | gut | schlecht | gut | schlecht |
| Mw der Granulate | [kD] | 93 | 132 | 81 | 93 | 78 |
| MFR 220°C / 2,16 kg | g/10min | 2,39 | 53,80 | fließt nicht | fließt | fließt |
| MFR 220°C / 5kg | g/10min | 58,14 | 195,88 | 59,44 | fließt | fließt |
| MFR 210°C / 10kg | g/10min | | | | 70,58 | |
| MFR 210°C / 2,16kg | g/10min | | | | | |
| MFR 180°C / 21,6kg | g/10min | | | | | 78,79 |
| Dichte | [g/cm³] | 1,156 | 1,157 | 1,151 | 1,154 | 1,139 |
| Shorehärte A | | 93 | 93 | 94 | 94 | 90 |
| Zugfestigkeit | [MPa] | 9 | 21 | 8 | 22 | 5 |
| Reißdehnung | [%] | 180 | 670 | 70 | 590 | 30 |
| Spannung bei 100% Dehnung | [MPa] | 8,4 | 8,9 | -* | 11,1 | -* |
| Weiterreißwiderstand | [kN/m] | 35 | 52 | 28 | 73 | 17 |
| Druckverformungsrest 72h/23°C/30min | [%] | 57 | 56 | 64 | 30 | 57 |
| Abrieb | [mm³] | 356 | 263 | 346 | 238 | 472 |
| Glasübergangstemperat ur der Weichphase (max. G") | [°C] | -50 | -45 | -30 | -25 | |
| Glasübergangstemperat ur der Weichphase (max. tan δ) | [°C] | -40 | -30 | -20 | -10 | |
| Glasübergangstemperat ur der Weichphase (DSC) | [°C] | -45 | -38 | -22 | -13 | |

| | | | | | | |
|---|---|---|---|---|---|---|
| *nicht bestimmbar | | | | | | |

**Tabelle 2b**

| | | **BSP6** | **BSP7 (Referenz)** | **BSP8** | **BSP9** |
|---|---|---|---|---|---|
| Hartphasenanteil | % | 39,6 | 39,6 | 39,6 | 39,6 |
| Herstellbarkeit | | Ja | Ja | Ja | Ja |
| Eigenschaften | | gut | schlecht | gut | gut |
| Mw der Granulate | [kD] | 81 | 85 | 135 | 133 |
| MFR 220°C / 2,16 kg | g/10min | 64,10 | fließt nicht | fließt | 57,54 |
| MFR 220°C / 5kg | g/10min | - | 52,98 | fließt | 138,25 |
| MFR 210°C / 10kg | g/10min | | | | |
| MFR 210°C / 2,16kg | g/10min | | | 44,88 | |
| MFR 180°C / 21,6kg | g/10min | | | | |
| Dichte | [g/cm³] | 1,145 | 1,139 | 1,145 | 1,143 |
| Shorehärte A | | 93 | 91 | 93 | 92 |
| Zugfestigkeit | [MPa] | 34 | 4 | 31 | 38 |
| Reißdehnung | [%] | 58 | 20 | 680 | 670 |
| Spannung bei 100% Dehnung | [MPa] | 10,7 | -* | 10,2 | 9,9 |
| Weiterreißwiderstand | [kN/m] | 73 | 18 | 73 | 77 |
| Druckverformungsrest 72h/23°C/30min | [%] | 28 | 62 | 28 | 25 |
| Abrieb | [mm³] | 149 | 598 | 229 | 123 |
| Glasübergangstemperat ur der Weichphase (max. G") | [°C] | -35 | -40 | -35 | -25 |
| Glasübergangstemperat ur der Weichphase (max. tan δ) | [°C] | -20 | -35 | -20 | -10 |
| Glasübergangstemperat ur der Weichphase (DSC) | [°C] | -30 | -37 | -21 | -21 |

| | | | | | |
|---|---|---|---|---|---|
| *nicht bestimmbar | | | | | |

### 5. Herstellbeispiele mit unterschiedlichen Polyolmischungen

Analog zu Beispiel 4 wurden verschiedene Polyole bzw. Abmischungen eingesetzt, die sich im mittleren Molekulargewicht des eingesetzten Polyols unterschieden.

Die Eigenschaften der erhaltenen thermoplastischen Polyurethane sind in Tabelle 3 zusammengefasst.

**Tabelle 3a**

| | | BSP 10 | BSP 11 | BSP 12 | BSP 13 |
|---|---|---|---|---|---|
| Eingesetztes Polyol | | E1190A | Polyol 2 | Polyol-Mischung (Polyol 2: Polyol 5) | Polyol-Mischung (Polyol 2: Polyol 5) |
| Massenverhältnis Polyole | | 100 | 100 | 80:20 | 50:50 |
| Mn | | | 1000 | 1200 | 1400 |
| Shorehärte A | | 94 | 93 | 92 | 92 |
| Zugfestigkeit | [MPa] | 56 | 25 | 20 | 24 |
| Reißdehnung | [%] | 490 | 670 | 720 | 670 |
| Weiterreißwiderstand | [kN/m] | 112 | 84 | 65 | 63 |
| Abrieb | [mm³] | 42 | 213 | 258 | 241 |
| Glasübergangstemperat ur der Weichphase (max. G") | [°C] | -43 | -20 | -30 | -35 |

**Tabelle 3b**

| | | BSP 14 | BSP 15 | BSP 16 |
|---|---|---|---|---|
| Eingesetztes Polyol | | Polyol-Mischung (Polyol 2: Polyol 5) | Polyol-Mischung (Polyol 2: Polyol 5) | Polyol 5 |
| Massenverhältnis Polyole | | 30:70 | 15:85 | 100 |
| Mn | | 1600 | 1800 | 2000 |
| Shorehärte A | | 90 | 94 | 93 |
| Zugfestigkeit | [MPa] | 12 | 21 | 16 |
| Reißdehnung | [%] | 660 | 670 | 620 |
| Weiterreißwiderstand | [kN/m] | 46 | 63 | 49 |
| Abrieb | [mm³] | 286 | 240 | 281 |
| Glasübergangstemperat ur der Weichphase (max. G") | [°C] | -40 | - | -45 |

Es zeigt sich, dass insbesondere Polypropylenglykole mit höheren Molekulargewichten, beispielsweise einem mittleren Molekulargewicht Mn von größer als 2000 zu weniger guten mechanischen Eigenschaften des erhaltenen thermoplastischen Polyurethans führen. Auch die Verwendung von Mischungen verschiedener Polypropylenglykole führt zu schlechten mechanischen Eigenschaften.

### 6. Prüfungsmethoden

Die mechanischen Werte wurden an Spritzgussplatten bestimmt, die zuvor 20 h bei 100 °C getempert worden waren.

| | |
|---|---|
| Dichte: | DIN EN ISO 1183-1, A : 2016 |
| ShoreA Härte: | DIN ISO 7619-1 : 2016 |
| Zugversuch: | DIN 53 504 : 2016 |
| Weiterreißwiderstand: | DIN ISO 34-1, B : 2016 |
| Abrieb: | DIN ISO 4649 / ASTM D1044 : 2016 |
| Druckverformungsrest: | DIN ISO 815 : 2016 |
| MFR: | DIN ISO 1133 : 2016 |
| DMA: | DIN EN ISO 6721 : 2016 |
| | (Torsionsmodus, Frequenz: 1 Hz, Heizrate 2K/min) Abweichend von den in der DIN vorgegebenen Parametern sind die im Rahmen der vorliegenden Erfindung bestimmten Parameter mit einem Stufenprogramm gemessen, das vergleichbar ist mit einem konstanten 2K/min Heizratenprogramm. Dabei wird mit einem 5 K Stufenprogramm und Haltezeiten pro Stufe von 35s gemessen. Die Messungen werden an Proben mit einem Breite zu Dicken Verhältnis von 1:6 durchgeführt. |
| DSC: | DIN EN ISO 11357-1 : 2016 (Heizrate 20 °C/min) |
| MW: | DIN 55672-2 : 1999-Teil2 (Gegen PMMA von Polymerstandards Service; Lösung in DMAC) |

### Zitierte Literatur

WO 2014/060300 A1
WO 2007/101807 A1
EP 1757632 A1
EP 1391472 A1
EP 900812 A1
DE 19625987 A1
WO 02/064656A2
WO 93/24549 A1
US 2006/0258831 A1
EP 1746117 A1
"Kunststoffhandbuch, Band 7, Polyurethane", Carl Hanser Verlag, 3. Auflage 1993, Kapitel 3.1 J.H. Saunders und K.C. Frisch "High Polymers", Band XVI, Polyurethane, Teil 1 und 2, Verlag Interscience Publishers 1962 bzw. 1964
Taschenbuch für Kunststoff-Additive von R.Gächter u. H.Müller (Hanser Verlag München 1990) DE-A 29 01 774 A1

## Patentansprüche

1. Thermoplastisches Polyurethan mit einer Glasübergangstemperatur der Weichphase von kleiner oder gleich -25°C, gemessen mit DMA und einer Heizrate von 2K/min bei 1Hz unter Torsion in Anlehnung an DIN EN ISO 6721 : 2016; Maximum G", erhalten oder erhältlich durch ein Verfahren, mindestens umfassend die Schritte (i) und (ii):
(i) Umsetzung einer Polyolzusammensetzung (PZ-1) enthaltend mindestens ein Polyol auf Basis von Polypropylenglykol, wobei der Anteil der sekundären, terminalen OH-Gruppen an der Gesamtzahl der terminalen OH Gruppen des Polypropylenglykols im Bereich von >90% liegt und das Polypropylenglykol ein zahlenmittleres Molekulargewicht Mn im Bereich von 650 g/mol bis 4000 g/mol aufweist, mit einem Polyisocanat (P1) unter Erhalt einer Polyolzusammensetzung (PZ-2) enthaltende ein Präpolymer (PP-1),
(ii) Umsetzung der Polyolzusammensetzung (PZ-2) enthaltend das Präpolymer (PP-1) mit einer Polyisocyanatzusammensetzung (PI), enthaltend mindestens ein Polyisocyanat (P2), und mindestens einem Kettenverlängerer mit einem Molekulargewicht < 500g/mol,
wobei die Umsetzung gemäß Schritt (i) kontinuierlich erfolgt.

2. Thermoplastisches Polyurethan gemäß Anspruch 1, wobei zwischen der Umsetzung gemäß Schritt (i) und der Umsetzung gemäß Schritt (ii) keine Lagerung oder Abfüllung der Polyolzusammensetzung (PZ-2) erfolgt.

3. Thermoplastisches Polyurethan gemäß einem der Ansprüche 1 oder 2, wobei das Verfahren kontinuierlich geführt wird.

4. Thermoplastisches Polyurethan gemäß einem der Ansprüche 1 bis 3, wobei bei der Umsetzung gemäß Schritt (i) mindestens 30% der sekundären, terminalen OH-Gruppen des Polypropylenglykols umgesetzt werden.

5. Thermoplastisches Polyurethan gemäß einem der Ansprüche 1 bis 4, wobei das Polypropylenglykol eine Polydispersität Pd von kleiner als 1,5 aufweist.

6. Thermoplastisches Polyurethan gemäß einem der Ansprüche 1 bis 5, wobei das Polypropylenglykol ein zahlenmittleres Molekulargewicht Mn im Bereich von 1200 g/mol bis 1750 g/mol und eine Polydidpersität Pd von kleiner als 1,5 aufweist.

7. Thermoplastisches Polyurethan gemäß einem der Ansprüche 1 bis 6, wobei die Umsetzung gemäß Schritt (i) in einem Statikmischer, Reaktionsextruder oder Rührkessel (Continuous Stirred Tank Reactors, CSTR) oder Kombinationen dieser erfolgt.

8. Thermoplastisches Polyurethan gemäß einem der Ansprüche 1 bis 7, wobei der Polyolzusammensetzung (PZ-2) bei der Umsetzung gemäß Schritt (ii) mindestens ein Polyol ausgewählt aus der Gruppe bestehend aus Polyetherdiolen, Polyesterdiolen und Polycarbonat(diol)en zugegeben wird.

9. Thermoplastisches Polyurethan gemäß einem der Ansprüche 1 bis 7, wobei der Polyolzusammensetzung (PZ-2) bei der Umsetzung gemäß Schritt (ii) kein weiteres Polyol zugegeben wird.

10. Thermoplastisches Polyurethan gemäß einem der Ansprüche 1 bis 9, wobei die das Polyisocyanat (P2) ausgewählt ist aus der Gruppe bestehend aus Methylendiphenyldiisocyanat (MDI), Hexamethylen-1,6-diisocyanat (HDI), 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), 1-Isocyanato-3,3,5-trimethyl-5-isocyanatomethyl-cyclohexan (Isophoron-diisocyanat, IPDI) und 4,4'-, 2,4'-und 2,2'-Methylendicyclohexyldiisocyanat (H12MDI).

11. Thermoplastisches Polyurethan gemäß einem der Ansprüche 1 bis 10, wobei das molare Verhältnis aus der Summe der Funktionalitäten der Komponenten der eingesetzten Polyolzusammensetzung (PZ-2) und Kettenverlängerer zu der Summe der Funktionalitäten der eingesetzten Isocyanatzusammensetzung (PI) im Bereich von 1 zu 0,8 bis 1 zu 1,3 liegt.

12. Thermoplastisches Polyurethan gemäß einem der Ansprüche 1 bis 11, wobei die Kennzahl bei der Umsetzung gemäß Schritt (ii) im Bereich von 965 bis 1100 liegt.

13. Thermoplastisches Polyurethan gemäß einem der Ansprüche 1 bis 12, wobei das thermoplastische Polyurethan eine Shore Härte im Bereich von 50 A bis 80 D aufweist, bestimmt gemäß DIN 53505.

14. Thermoplastisches Polyurethan gemäß einem der Ansprüche 1 bis 13, wobei das thermoplastische Polyurethan opak bis transparent ist.

15. Verfahren zur Herstellung eines thermoplastischen Polyurethans mit einer Glasübergangstemperatur der Weichphase von kleiner oder gleich -25°C, gemessen mit DMA und einer Heizrate von 2K/min bei 1Hz unter Torsion in Anlehnung an DIN EN ISO 6721 : 2016; Maximum G", mindestens umfassend die Schritte (i) und (ii):
(i) Umsetzung einer Polyolzusammensetzung (PZ-1) enthaltend mindestens ein Polyol auf Basis von Polypropylenglykol, wobei der Anteil der sekundären, terminalen OH-Gruppen an der Gesamtzahl der terminalen OH Gruppen des Polypropylenglykols im Bereich von >90% liegt, mit einem Polyisocanat (P1) unter Erhalt einer Polyolzusammensetzung (PZ-2) enthaltende ein Präpolymer (PP-1),
(ii) Umsetzung der Polyolzusammensetzung (PZ-2) enthaltend das Präpolymer (PP-1) mit einer Polyisocyanatzusammensetzung (PI), enthaltend mindestens ein Polyisocyanat (P2), und mindestens einem Kettenverlängerer mit einem Molekulargewicht < 500g/mol,
wobei die Umsetzung gemäß Schritt (i) kontinuierlich erfolgt.

16. Verwendung eines thermoplastischen Polyurethans gemäß einem der Ansprüche 1 bis 14 oder eines thermoplastischen Polyurethans erhältlich oder erhalten nach einem Verfahren gemäß Anspruch 15 zur Herstellung von Extrusions-, Spritzguss- und Pressartikeln sowie Schäumen, Schuhsohlen, Kabelummantelungen, Schläuchen, Profilen, Antriebsriemen, Fasern, Vliesen, Folien, Formteilen, Steckern, Gehäusen, Dämpfungselementen für Elektroindustrie, Automobilindustrie, Maschinenbau, 3D-Druck, Medizin und Konsumartikel geeignet, insbesondere zur Herstellung von Spritzgussprodukten, Extrusionsprodukten, Folien, Profile und Formkörpern.

17. Formkörper, umfassend ein thermoplastischen Polyurethans gemäß einem der Ansprüche 1 bis 14 oder ein thermoplastisches Polyurethan erhältlich oder erhalten nach einem Verfahren gemäß Anspruch 15.

## Claims

1. A thermoplastic polyurethane having a glass transition temperature of the soft phase of not more than -25°C measured using DMA and a heating rate of 2K/min at 1Hz under torsion based on DIN EN ISO 6721: 2016; maximum G" obtained or obtainable by a process at least comprising the steps (i) and (ii):
(i) reaction of a polyol composition (PZ-1) comprising at least one polyol based on polypropylene glycol, wherein the proportion of the secondary terminal OH groups based on the total number of terminal OH groups of the polypropylene glycol is in the range of >90% and the polypropylene glycol has a number-average molecular weight Mn in the range from 650 g/mol to 4000 g/mol, with a polyisocyanate (P1) to obtain a polyol composition (PZ-2) comprising a prepolymer (PP-1),
(ii) reaction of the polyol composition (PZ-2) comprising the prepolymer (PP-1) with a polyisocyanate composition (PI) comprising at least one polyisocyanate (P2) and at least one chain extender having a molecular weight < 500g/mol,
wherein the reaction according to step (i) is carried out continuously.

2. The thermoplastic polyurethane according to claim 1, wherein no storage or containerizing of the polyol composition (PZ-2) takes place between the reaction according to step (i) and the reaction according to step (ii).

3. The thermoplastic polyurethane according to either of claims 1 or 2, wherein the process is run as a continuous process.

4. The thermoplastic polyurethane according to any of claims 1 to 3, wherein in the reaction according to step (i) at least 30% of the secondary terminal OH groups of the polypropylene glycol are converted.

5. The thermoplastic polyurethane according to any of claims 1 to 4, wherein the polypropylene glycol has a polydispersity Pd of less than 1.5.

6. The thermoplastic polyurethane according to any of claims 1 to 5, wherein the polypropylene glycol has a number-average molecular weight Mn in the range from 1200 g/mol to 1750 g/mol and a polydispersity Pd of less than 1.5.

7. The thermoplastic polyurethane according to any of claims 1 to 6, wherein the reaction according to step (i) is carried out in a static mixer, reactive extruder or stirred tank (continuous stirred tank reactor, CSTR) or combinations thereof.

8. The thermoplastic polyurethane according to any of claims 1 to 7, wherein at least one polyol selected from the group consisting of polyether diols, polyester diols and polycarbonates or polycarbonate diols is added to the polyol composition (PZ-2) in the reaction according to step (ii).

9. The thermoplastic polyurethane according to any of claims 1 to 7, wherein no further polyol is added to the polyol composition (PZ-2) in the reaction according to step (ii).

10. The thermoplastic polyurethane according to any of claims 1 to 9, wherein the polyisocyanate (P2) is selected from the group consisting of methylenediphenyl diisocyanate (MDI), hexamethylene 1,6-diisocyanate (HDI), 1,5-naphthylene diisocyanate (NDI), 2,4- and/or 2,6-tolylene diisocyanate (TDI), 3,3'-dimethyl-4,4'-diisocyanatodiphenyl (TODI), p-phenylene diisocyanate (PDI), 1-isocyanato-3,3,5-trimethyl-5-isocyanatomethylcyclohexane (isophorone diisocyanate, IPDI) and 4,4'-, 2,4'- and 2,2'-methylenedicyclohexyl diisocyanate (H12MDI).

11. The thermoplastic polyurethane according to any of claims 1 to 10, wherein the molar ratio of the sum of the functionalities of the components of the employed polyol composition (PZ-2) and the chain extender to the sum of the functionalities of the employed isocyanate composition (PI) is in the range from 1:0.8 to 1:1.3.

12. The thermoplastic polyurethane according to any of claims 1 to 11, wherein the index in the reaction according to step (ii) is in the range from 965 to 1100.

13. The thermoplastic polyurethane according to any of claims 1 to 12, wherein the thermoplastic polyurethane has a Shore hardness in the range from 50 A to 80 D determined according to DIN 53505.

14. The thermoplastic polyurethane according to any of claims 1 to 13, wherein the thermoplastic polyurethane is opaque to transparent.

15. A process for producing a thermoplastic polyurethane having a glass transition temperature of the soft phase of not more than -25°C measured using DMA and a heating rate of 2K/min at 1Hz under torsion based on DIN EN ISO 6721: 2016; maximum G" at least comprising the steps (i) and (ii):
(i) reaction of a polyol composition (PZ-1) comprising at least one polyol based on polypropylene glycol, wherein the proportion of the secondary terminal OH groups based on the total number of terminal OH groups of the polypropylene glycol is in the range of >90%, with a polyisocyanate (P1) to obtain a polyol composition (PZ-2) comprising a prepolymer (PP-1),
(ii) reaction of the polyol composition (PZ-2) comprising the prepolymer (PP-1) with a polyisocyanate composition (PI) comprising at least one polyisocyanate (P2) and at least one chain extender having a molecular weight < 500g/mol,
wherein the reaction according to step (i) is carried out continuously.

16. The use of a thermoplastic polyurethane according to any of claims 1 to 14 or of a thermoplastic polyurethane obtainable or obtained by a process according to claim 15 for producing extruded, injection molded and pressed articles and also foams, shoe soles, cable sheathings, hoses, profiles, drive belts, fibers, nonwovens, films, moldings, plugs, housings, damping elements for the electricals industry, automotive industry, mechanical engineering, 3-D printing, medicine and consumer goods, in particular for producing injection molded products, extruded products, films, profiles and shaped articles.

17. A shaped article comprising a thermoplastic polyurethane according to any of claims 1 to 14 or a thermoplastic polyurethane obtainable or obtained by a process according to claim 15.

## Revendications

1. Polyuréthane thermoplastique ayant une température de transition vitreuse de la phase souple inférieure ou égale à -25 °C, mesurée par AMD avec une vitesse de montée en température de 2K/min à 1 Hz sous torsion conformément à DIN EN ISO 6721 : 2016 ; G" maximum, obtenu ou pouvant être obtenu par un procédé comprenant au moins les étapes (i) et (ii) :
(i) réaction d'une composition de polyols (PZ-1) contenant au moins un polyol à base de polypropylèneglycol, la proportion des groupes OH terminaux secondaires par rapport au nombre total des groupes OH terminaux du polypropylèneglycol étant dans la plage > 90 % et le polyéthylèneglycol présentant une masse moléculaire moyenne en nombre Mn dans la plage de 650 g/mol à 4 000 g/mol, avec un polyisocyanate (P1), avec obtention d'une composition de polyols (PZ-2) contenant un prépolymère (PP-1),
(ii) réaction de la composition de polyols (PZ-2) contenant le prépolymère (PP-1) avec une composition de polyisocyanates (PI) contenant au moins un polyisocyanate (P2) et au moins un prolongateur de chaîne ayant une masse moléculaire < 500 g/mol,
la réaction selon l'étape (i) étant effectuée en continu.

2. Polyuréthane thermoplastique selon la revendication 1, aucun stockage ni remplissage de la composition de polyols (PZ-2) n'ayant lieu entre la réaction selon l'étape (i) et la réaction selon l'étape (ii) .

3. Polyuréthane thermoplastique selon l'une des revendications 1 ou 2, le procédé étant mis en œuvre en continu.

4. Polyuréthane thermoplastique selon l'une des revendications 1 à 3, au moins 30 % des groupes OH terminaux secondaires du polypropylèneglycol étant mis à réagir lors de la réaction selon l'étape (i).

5. Polyuréthane thermoplastique selon l'une des revendications 1 à 4, le polypropylèneglycol présentant une polydispersité Pd inférieure à 1,5.

6. Polyuréthane thermoplastique selon l'une des revendications 1 à 5, le polypropylèneglycol présentant une masse moléculaire moyenne en nombre Mn dans la plage de 1 200 g/mol à 1 750 g/mol et une polydispersité Pd inférieure à 1,5.

7. Polyuréthane thermoplastique selon l'une des revendications 1 à 6, la réaction selon l'étape (i) étant mise en œuvre dans un mélangeur statique, une extrudeuse réactive ou une cuve-agitateur (Continuous Stirred Tank Reactors, CSTR) ou des combinaisons de ceux-ci.

8. Polyuréthane thermoplastique selon l'une des revendications 1 à 7, la composition de polyols (PZ-2) étant, lors de la réaction selon l'étape (ii), additionnée d'au moins un polyol choisi dans le groupe consistant en les polyétherdiols, les polyesterdiols et les polycarbonate(diol)s.

9. Polyuréthane thermoplastique selon l'une des revendications 1 à 7, la composition de polyols (PZ-2) n'étant, lors de la réaction selon l'étape (ii), additionnée d'aucun autre polyol.

10. Polyuréthane thermoplastique selon l'une des revendications 1 à 9, le polyisocyanate (P2) étant choisi dans le groupe consistant en le diphényldiisocyanate de méthylène (MDI), le 1,6-diisocyanate d'hexaméthylène (HDI), le 1,5-diisocyanate de naphtylène (NDI), le 2,4- et/ou le 2,6-diisocyanate de toluylène (TDI), le 3,3'-diméthyl-4,4'-diisocyanato-diphényle (TODI), le diisocyanate de p-phénylène (PDI), le 1-isocyanato-3,3,5-triméthyl-5-isocyanatométhyl-cyclohexane (diisocyanate d'isophorone, IPDI) et le 4,4'-, le 2,4'- et le 2,2'-dicyclohexyldiisocyanate de méthylène (H12MDI).

11. Polyuréthane thermoplastique selon l'une des revendications 1 à 10, le rapport en moles de la somme des fonctionnalités des composants de la composition de polyols utilisée (PZ-2) et des prolongateurs de chaîne à la somme des fonctionnalités de la composition d'isocyanates utilisée (PI) étant dans la plage de 1:0,8 à 1:1,3.

12. Polyuréthane thermoplastique selon l'une des revendications 1 à 11, la constante, lors de la réaction selon l'étape (ii), étant dans la plage de 965 à 1 100.

13. Polyuréthane thermoplastique selon l'une des revendications 1 à 12, le polyuréthane thermoplastique présentant une dureté Shore dans la plage de 50 A à 80 D, déterminée selon DIN 53505.

14. Polyuréthane thermoplastique selon l'une des revendications 1 à 13, le polyuréthane thermoplastique étant opaque à transparent.

15. Procédé de fabrication d'un polyuréthane thermoplastique ayant une température de transition vitreuse de la phase souple inférieure ou égale à - 25 °C, mesurée par AMD et avec une vitesse de montée en température de 2K/min à 1 Hz sous torsion conformément à DIN EN ISO 6721 : 2016 ; G" maximum, comprenant au moins les étapes (i) et (ii) :
(i) réaction d'une composition de polyols (PZ-1) contenant au moins un polyol à base de polypropylèneglycol, la proportion des groupes OH terminaux secondaires par rapport au nombre total des groupes OH terminaux du polypropylèneglycol étant dans la plage > 90 %, avec un polyisocyanate (P1), avec obtention d'une composition de polyols (PZ-2) contenant un prépolymère (PP-1),
(ii) réaction de la composition de polyols (PZ-2) contenant le prépolymère (PP-1) avec une composition de polyisocyanates (PI) contenant au moins un polyisocyanate (P2) et au moins un prolongateur de chaîne ayant une masse moléculaire < 500 g/mol,
la réaction selon l'étape (i) étant effectuée en continu.

16. Utilisation d'un polyuréthane thermoplastique selon l'une des revendications 1 à 14 ou d'un polyuréthane thermoplastique pouvant être obtenu ou étant obtenu par un procédé selon la revendication 15 pour la fabrication d'articles obtenus par extrusion, moulage par injection et compression, ainsi que de mousses, de semelles de chaussures, de gainages de câble, de tuyaux souples, de profilés, de courroies d'entraînement, de fibres, de non-tissés, de feuilles, d'objets moulés, de prises, de boîtiers, d'éléments d'amortissement convenant à l'industrie électrique, à l'industrie automobile, à la construction mécanique, à l'impression 3D, à la médecine et aux biens de consommation, en particulier pour la fabrication de produits moulés par injection, de produits extrudés, de feuilles, de profilés et d'objets moulés.

17. Objet moulé, comprenant un polyuréthane thermoplastique selon l'une des revendications 1 à 14 ou un polyuréthane thermoplastique pouvant être obtenu ou obtenu par un procédé selon la revendication 15.
